(19) Europäisches Patentamt
European Patent Office
Office européen des brevets

(11) **EP 3 096 518 A1**

(12) **EUROPEAN PATENT APPLICATION**

(43) Date of publication:
**23.11.2016 Bulletin 2016/47**

(51) Int Cl.:
*H04N 19/176* (2014.01)  *H04N 19/102* (2014.01)
*H04N 19/136* (2014.01)

(21) Application number: **15305760.9**

(22) Date of filing: **20.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Le Pendu, Mikaël
35576 Cesson-Sévigné (FR)**

• **Alain, Martin
35576 Cesson-Sévigné (FR)**
• **Thoreau, Dominique
35576 Cesson-Sévigné (FR)**
• **Guillemot, Christine
35042 Rennes Cedex (FR)**

(74) Representative: **Huchet, Anne
TECHNICOLOR
1-5, rue Jeanne d'Arc
92130 Issy-les-Moulineaux (FR)**

(54) **METHODS, SYSTEMS AND APPARATUS FOR DETERMINING PREDICTION ADJUSTMENT FACTORS**

(57) The present principles provide a method and an encoder for encoding an image frame. The method includes generating, with a processor, for each block in the image frame a prediction block based on at least a prediction method; generating a scaling factor and an offset for adjusting the prediction block; and transforming the prediction block into an adjusted prediction block based on the scaling factor and the offset. The encoder includes a processor configured to, for each block in the image frame, generate a prediction block based on at least a prediction method and generate a scaling factor and an offset for adjusting the prediction block and to transform the prediction block into an adjusted prediction block based on the scaling factor and the offset. The scaling factor and offset minimize error between the block and the adjusted prediction block.

FIGURE 2

EP 3 096 518 A1

**Description**

**TECHNICAL FIELD**

The present disclosure relates to the encoding and decoding of images and video sequences, and, more particularly, to a method and apparatus for adjusted prediction video coding and decoding.

**BACKGROUND**

Video compression coders and/or decoders (CODECs) gain much of their compression efficiency from prediction methods (e.g., intra and inter prediction schemes). However, conventional prediction methods fail to sufficiently improve coding efficiency when there are brightness variations. Unfortunately, such conventional prediction methods can fail (or become extremely inefficient) when serious temporal brightness variation is involved, e.g. due to changes in brightness, fade-in/out effects, camera flashes, etc.

The HEVC and the H.264/JVT/MPEG AVC standards offer a weighted prediction (WP) tool. The WP tool modifies a reference frame by multiplying each of the reference frames' pixels by a weighting/scaling parameter and adding an offset parameter. Inter prediction (including motion estimation at the encoder and motion compensation at both the encoder and the decoder) may then be performed based on the modified reference frame(s). The scaling or weighting factor of the WP tool is based on the reference picture index (or indices in the case of bi-prediction) of the current block. Only a single set of parameters, consisting of a weighting factor and an offset, is associated with each reference picture index for the current picture. Thus, the same single set of parameters is utilized for all the pixels of a single reference frame.

Existing tools, including the WP tool, have not addressed local brightness variations. Local brightness variations (either spatially or temporally) may occur for various reasons. For example, the lighting conditions may vary in a video sequence (e.g. because of lighting changes, camera flashes, camera iris adjustments). Likewise, lighting conditions may be non-homogeneous in an image or video scene. Even when lighting conditions remain the same, local brightness variations may occur based on the movement of objects or characters in a video or image (e.g., because the object or video is lit from different angles).

Such local brightness variations reduce the efficiency of existing prediction schemes because the phenomena are irregular occurring, and thus are difficult, if not impossible to predict. Moreover, when there are local brightness variations, different regions of the image may require different parameters. While the WP tool may account for some global brightness variations, the WP tool is considerably limited during local brightness variations. The WP tool fails to address local brightness variations because it is limited to utilizing a single set of parameters, consisting of an offset and a weighting/scaling factor, for an entire reference frame.

While some approaches have been developed to address local brightness variations, such approaches are deficient because they may only be available in pre-processing stages, are limited to inter predictions, and are limited to a single set of parameters for all the pixels of a reference frame (with a maximum of 16 reference frames in H.264, thereby only 16 sets of parameters).

S.-H. Tsang, Y.-L. Chan, and W.-C. Siu, "Region-Based Weighted Prediction for Coding Video With Local Brightness Variations", IEEE TRANSACTIONS ON CIRCUITS AND SYSTEMS FOR VIDEO TECHNOLOGY, March 2013, describes that, given a current frame and a reference frame, several image regions are defined and a WP parameter set is computed for each region. For each parameter set, scaling and offset operations are applied to the decoded reference frame to create a new reference frame. All the operations are performed in the preprocessing stage. The encoder can choose the best reference frame (corresponding to a parameter set) for each macroblock. No generalization can be made to other types of prediction (e.g. intra, inter-layer in the case of scalable coding).

Brightness variations may also occur in a scalable compression scheme, such as when a base layer is a Low Dynamic Range image (LDR) and the enhancement layer is a High Dynamic Range image (HDR). For example, an LDR image can contain local brightness differences with the corresponding HDR frame in the enhancement layer (for example, if the LDR image was generated by a local tone mapping operator). In such a scalable scheme an inter-layer prediction scheme must be used to predict an HDR frame from its corresponding LDR frame in the base layer.

In existing tools, a global inter-layer prediction scheme applies the same function independently to all the pixels of a decoded LDR frame to predict the HDR frame. However, this is not sufficient to address local brightness variations in the case of a LDR layer containing local brightness differences with the HDR layer. Existing techniques do not address this problem because they are limited to inter-prediction coding which uses multiple reference frames.

Accordingly, it would be desirable and highly advantageous to have a method and apparatus for prediction adjustment during video coding that overcomes at least the above-identified deficiencies of existing techniques.

**SUMMARY OF PRESENT PRINCIPLES**

Thus, a need exists for improving the prediction of existing prediction schemes (including but not limited to inter or inter-layer in a scalable context).

The present principles provide a method for encoding an image frame including generating, with a processor, for each block in the image frame a prediction block based on at least a prediction method; generating, with the processor, a scaling factor and an offset for adjusting the prediction block; and transforming, with the processor, the prediction block into an adjusted prediction block based on the scaling factor and the offset; where the scaling factor and offset minimize error between the block and the adjusted prediction block.

The present principles further provide an encoder for encoding an image frame comprising: a processor configured to, for each block in the image frame, generate a prediction block based on at least a prediction method; where the processor is further configured to generate a scaling factor and an offset for adjusting the prediction block and to transform the prediction block into an adjusted prediction block based on the scaling factor and the offset; and where the scaling factor and offset minimize error between the block and the adjusted prediction block.

According to an aspect of present principles, the encoding method or the encoder further include encoding with the processor a residue based on the block and the adjusted prediction block.

According to an aspect of present principles, the encoding method or the encoder further include where the prediction method is at least one of inter prediction, inter-layer prediction and intra prediction.

According to an aspect of present principles, the encoding method or the encoder further include where the scaling factor is determined based on a quantized scaling factor.

According to an aspect of present principles, the encoding method or the encoder further include where the offset is not encoded.

According to an aspect of present principles, the encoding method or the encoder further include where a quantized scaling factor is encoded.

According to an aspect of present principles, the encoding method or the encoder further include where the offset is determined based on a quantized scaling factor.

According to an aspect of present principles, the encoding method or the encoder further include where the scaling factor and the offset minimize error given the offset is estimated but not encoded and the scaling factor is quantized.

According to an aspect of present principles, the encoding method or the encoder further include where the quantized scaling factor is determined using rate distortion optimization.

According to an aspect of present principles, the encoding method or the encoder further include where the error is minimized based on at least one selected from a group of a Minimum Square Error (MSE) metric, a sum of absolute difference (SAD), structural similarity index (SSIM)).

According to an aspect of present principles, the encoding method or the encoder further include where a quantized scaling factor is set to a value that indicates that the prediction block will not be adjusted.

According to an aspect of present principles, the encoding method or the encoder further include where the prediction block is determined based on block matching using a rate distortion criteria based on a quantized scaling factor.

The present principles further provide a method for decoding an image frame from a bit stream comprising: generating, with a processor, for each block in the image frame a prediction block based on at least a prediction method; generating, with the processor a scaling factor and an offset for adjusting the prediction block; and transforming, with the processor, the prediction block into an adjusted prediction block based on the scaling factor and the offset; where the scaling factor and offset minimize error between the block and the adjusted prediction block.

The present principles further provide a decoder for decoding an image frame from a bit stream comprising: a processor configured to, for each block in the image frame, generate a prediction block based on at least a prediction method; where the processor is further configured to generate a scaling factor and an offset for adjusting the prediction block and to transform the prediction block into an adjusted prediction block based on the scaling factor and the offset; and where the scaling factor and offset minimize error between the block and the adjusted prediction block.

According to an aspect of present principles, the decoding method or the decoder further include decoding with the processor a residue based on the block and the adjusted prediction block.

According to an aspect of present principles, the decoding method or the decoder further include where the prediction method is at least one of inter prediction, inter-layer prediction and intra prediction.

According to an aspect of present principles, the decoding method or the decoder further include where the scaling factor is determined based on a quantized scaling factor decoded from the bit stream.

According to an aspect of present principles, the decoding method or the decoder further include where the offset is not decoded from the bit stream and is estimated based on a quantized scaling factor decoded from the bit stream.

According to an aspect of present principles, the decoding method or the decoder further include where a value of a quantized scaling factor indicates that the prediction block will not be adjusted.

## BRIEF SUMMARY OF THE DRAWINGS

The features and advantages of the present invention may be apparent from the detailed description below when taken in conjunction with the Figures described below:

Figure 1 is a diagram depicting regression lines in accordance with present principles.
Figure 2 is a diagram depicting an exemplary encoder in accordance with present principles.
Figure 3 is a diagram depicting an exemplary decoder in accordance with present principles.
Figure 4 is a diagram depicting an exemplary encoding method in accordance with present principles.
Fig. 5 is a diagram depicting an exemplary decoding method in accordance with present principles.
Figure 6 is a diagram depicting an exemplary device in accordance with present principles.
Figure 7 is a diagram depicting rate distortion curves obtained by a scalable encoding scheme where the base layer is a LDR image and the enhancement layer is a HDR image.
Figure 8 is a diagram depicting rate distortion curves obtained by a scalable encoding scheme where the base layer is a LDR image and the enhancement layer is a HDR image.

## DETAILED DESCRIPTION

Aspects of present principles may be included in any image or video compression scheme (e.g., HEVC, MPEG-4, MPEG-2). In compression algorithms, an image is encoded after being divided into blocks. A corresponding prediction block is determined for each block being encoded using, for example, spatial or temporal correlations based on already encoded blocks. A transform such as Discrete Cosine Transform (DCT) is applied to the prediction residual-the difference between the block being encoded and its corresponding prediction block. The transform coefficients (including a DC and AC coefficients) can be quantized before being encoded into the bit-stream.

An aspect of principles is directed to improving the performance of an encoder and/or decoder (e.g., encoder and/or decoder compliant with the HEVC or MPEG-4 AVC/H.264 standards) by adjusting the values of pixels of prediction blocks for each block of the image. An aspect of present principles is directed to scaling of the pixel values of the predicted block.

An aspect of present principles is applicable to any prediction scheme, including inter prediction, intra prediction, or inter-layer prediction of an LDR base layer and HDR enhancement layer, or any other type of prediction.

- An aspect of present principles increases the accuracy of prediction by providing optimized scaling of the predicted pixel values and transmission of the scaling factor. These increases in accuracy of prediction are crucial for improving encoding quality and reducing the bitrate.

An aspect of present principles is directed to deriving and encoding at least a parameter of a linear scaling (e.g., a set of parameters consisting an offset and a scaling factor), independently for each predicted block.

An aspect of present principles relates to encoding the parameters of linear scaling. The encoder may determine not to adjust the prediction of a block. In an example, a flag indicating whether the prediction has been adjusted may be signaled to the decoder. In an example, setting a quantized scaling factor value to zero (0) may signal to a decoder that no adjustment was performed.

An aspect of present principles is directed to an optimized rate distortion method for the independent scaling of each prediction block with a low transmission cost of the scaling parameters.

An aspect of present principles is directed to linear scaling during block matching. This can be utilized in any prediction method based on block matching (e.g., inter prediction). An advantage of including linear scaling in block matching is that matching of the reference frames will improve. Another advantage is that quality prediction will improve. Another advantage is an increase in the coherency of the motion vector field, requiring fewer bits for encoding.

### 1. Adjusted Prediction Based on Scaling and Offset Parameters

An aspect of present principles is directed to performing adjusted prediction. An aspect of present principles is directed to performing adjusted prediction based on an offset parameter and/or a scaling parameter.

An aspect of present principles is directed to determining an offset $o$. An aspect of present principles is directed to determining an optimal offset $o$. The offset $\hat{o}$ may be estimated based on the optimal offset $o$. The optimal offset $o$ may not be computable by the decoder.

An aspect of present principles is directed to determining a scaling factor $s$. An aspect of present principles is directed to determining an optimal scaling factor $s$. The scaling factor $\hat{s}$ may be determined based on the optimal scaling factor $s$. The scaling factor $\hat{s}$ may be the result of quantizing and de-quantizing the optimal scaling factor $s$. The difference between the optimal scaling factor *s* and the scaling factor $\hat{s}$ may be a rounding or quantization error.

In one example, a current block being encoded (otherwise known as an original block) may be identified as $B_{org}$. A prediction block of the original block $B_{org}$ may be identified as $B_{pred}$. The prediction block $B_{pred}$ may be adjusted based on scaling factor $\hat{s}$ and offset *o* to determine an adjusted prediction block $B'_{pred}$. The adjusted prediction block $B'_{pred}$ may be determined as follows:

$$\text{Equation No. (1)} \qquad B'_{pred} = \hat{o} + \hat{s}.B_{pred}$$

With regard to this and the following equations, the symbol "."denotes multiplication. In Equation No. 1, o denotes the offset parameter and $\hat{s}$ denotes the scaling factor parameter. In one example, an aspect of present principles is directed to determining the scaling factor $\hat{s}$ and the offset $\hat{o}$. The offset o and the scaling factor $\hat{s}$ should minimize error between the original block $B_{org}$ and the adjusted prediction block $B'_{pred}$. In one example, offset $\hat{o}$ and the scaling factor $\hat{s}$ should minimize the mean squared error $\left\| B_{org} - B'_{pred} \right\|_2^2$ between $B'_{pred}$ and $B_{org}$.

The optimal values for the offset and scaling factor parameters *o* and *s,* corresponding to optimal offset *o* and optimal scaling factor *s*, respectively, can be determined using linear regression. The offset $\hat{o}$ and the scaling factor $\hat{s}$ may be available at the encoder and/or decoder. In one example, in order to reduce transmission cost, only the scaling factor $\hat{s}$ may be encoded.

In one example, based on the values of the scaling factor $\hat{s}$ and offset $\hat{o}$, the pixel values of the adjusted prediction block $B'_{pred}$ might be negative or higher than the dynamic range of the encoder (e.g. higher than 255 in the case of an 8 bit encoder). The pixel values of the adjusted prediction block $B'_{pred}$ may then be adjusted to the desired range. In one example, the pixel values of the adjusted prediction block $B'_{pred}$ may be adjusted by a clipping operation. The clipping operation may set pixel values lower than zero to zero and pixel values higher than the maximum value to the maximum value (e.g., 255).

## 2. Offset Parameter

In compression schemes based on the DCT transform, the difference between the offset $\hat{o}$ and the optimal offset *o, (o - ô),* may be indirectly encoded as the DC coefficient of the transformed prediction residual difference $B_{org} - B'_{pred}$.

In one example, the difference between the optimal offset parameter o and the offset parameter $\hat{o}$, (o - ô), is not encoded. An advantage of this approach includes avoiding assigning information to existing DC coefficients, thereby avoiding interference with the quantization and encoding of the DC coefficients that may already be optimized in the compression scheme (e.g. by a quantization step depending on a parameter of the encoder or by a rate distortion optimized quantization).

In one example, the parameter for the offset o may be determined based on data known by the decoder (e.g., pixel data in the prediction block $B_{pred}$, the scaling factor s).

In one example, the offset o may be derived based on the mean value $\overline{B_{pred}}$ of the pixels of the predicted block $B_{pred}$. Thus, the encoder need not encode the offset $\hat{o}$ nor the difference (o - ô), thereby reducing computation costs.

Given an optimal scaling factor *s*, the optimal offset *o* may be determined as follows:

$$\text{Equation No. (2)} \qquad o = \overline{B_{org}} - s.\overline{B_{pred}}$$

The mean value of the pixel values of the original block $B_{org}$ may be unknown to the decoder. Thus in one example, an assumption may be made that the mean value of the original block $B_{org}$ is close to the mean value of the prediction block $\overline{B_{pred}}$. The mean value of the original block $\overline{B_{org}}$ may be replaced by the mean value of the prediction block $\overline{B_{pred}}$ in order to determine the offset $\hat{o}$ of the corresponding optimal offset *o* for the predicted block $B_{pred}$ and the scaling factor $\hat{s}$.

Because the decoder may not know the mean value of the original block $B_{org}$, the offset $\hat{o}$ may be determined at the decoder based on the mean value of the predicted block $B_{red}$ and the scaling factor $\hat{s}$. The scaling factor $\hat{s}$ may be determined based off of Equations Nos. (6)-(9) shown below.

In one example, the offset o may be determined as follows:

$$\text{Equation No. (3)} \qquad \hat{o} = (1 - \hat{s}).\overline{B_{pred}}$$

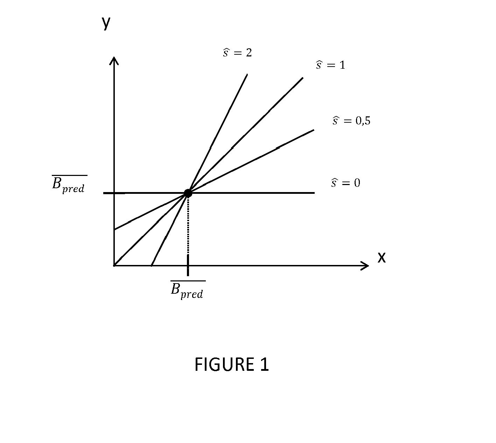

Fig. 1 illustrates various regression lines based on Equation No. 3 for different values of the parameter $\hat{s}$. In Fig. 1, the X axis pertains to the pixel values of a prediction block. The Y axis pertains to pixel values of the prediction block adjusted with the parameters o and $\hat{s}$.

Fig. 1 illustrates regression lines that represent the function in Equation No. (1) applied to the pixel values of the prediction block $B_{pred}$ to obtain the pixel values of the adjusted prediction block $B'_{pred}$. For any value of scaling factor $\hat{s}$, the mean value of the prediction block will remain unchanged after the adjustment such that the mean value $\overline{B'_{pred}}$ of the adjusted prediction block $B_{pred}'$ is equal to the mean value $\overline{B_{pred}}$ of the initial prediction block $B_{pred}$ (i.e. $\overline{B'_{pred}} = \overline{B_{pred}}$). Fig. 1 illustrates how the definition of the offset ô constrains the regression lines that can be used in the prediction adjustment method. As shown in Fig. 1, the regression lines all intersect at the coordinate point pair of $(\overline{B_{pred}}, \overline{B_{pred}})$. Thereby, not all the lines are possible (unlike normal linear regression), rather only the lines that passes through the point $(\overline{B_{pred}}, \overline{B_{pred}})$ can be used.

### 3. Scaling Parameter

In one example, the parameter for the scaling factor $\hat{s}$ may be determined based on the mean squared error (MSE) metric. In another example, the parameter for the scaling factor s may be determined based on any error measurement metric between the original block and the adjusted block (e.g., sum of absolute difference (SAD), structural similarity index (SSIM)). The parameter for the scaling factor $\hat{s}$ is determined in order to minimize the error between the original block and the adjusted prediction block based on the used error metric (e.g., MSE, SAD, SSIM, etc.). The parameter for the scaling factor $\hat{s}$ may be determined based on an optimal scaling factor s that allows the minimization of error.

In one example, based on Equations Nos. (1)-(3), the mean squared error (MSE) between the original block and the adjusted prediction block may be determined as follows:

$$\text{Equation No. (4)} \qquad \left\| B_{org} - B_{pred}' \right\|_2^2 = \left\| B_{org} - (1 - \hat{s}).\overline{B_{pred}} - \hat{s}.B_{pred} \right\|_2^2$$

In one example, the value of the optimal scaling factor $\hat{s}$ may be determined to minimize the MSE between the original block and the adjusted prediction block. The optimal scaling factor s in the least square sense may be determined by the following minimization problem:

$$\text{Equation No. (5)} \qquad \text{argmin}_s \sum_{i=1}^{n} (y_i - (1 - s).\overline{B_{pred}} - s.x_i)^2$$

where $x_i$ is the value of the predicted block $B_{pred}$ pixel at pixel position $i$, and $y_i$ is the value of the original block $B_{org}$ pixel at pixel position $i$, and $n$ is the number of pixels in each block (where the predicted block $B_{pred}$ and the original block $B_{org}$ have the same number of pixels).

The optimal scaling factor $\hat{s}$ may be determined by differentiating Equation No. (5) with respect to scaling factor s and setting the derivative to zero. The optimal scaling factor s may then be determined as follows:

$$\text{Equation No. (6)} \qquad s = \frac{\overline{xy} - \bar{x}.\bar{y}}{\overline{x^2} - \bar{x}^2}$$

where $\overline{xy} = \frac{1}{n}\sum_{i=1}^{n} x_i.y_i$ (Equation No. 6a); $\overline{x^2} = \frac{1}{n}\sum_{i=1}^{n} x_i^2$ (Equation No. 6b); $\bar{x} = \frac{1}{n}\sum_{i=1}^{n} x_i = \overline{B_{pred}}$ (Equa-

tion No. 6c); $\bar{y} = \frac{1}{n}\sum_{i=1}^{n} y_i = \overline{B_{org}}$ (Equation No. 6d).

The same expression for *s* can be obtained in a regular linear regression without the constraint on the offset in Equation No. (3).

In one example, the parameter for the scaling factor $\hat{s}$ may be determined at the encoder and at the decoder.

### 4. Quantization of Scaling Factor

A scaling factor predictor $s_{pred}$ may predict the value of the optimal scaling factor s. The scaling factor predictor $s_{pred}$ may correspond to a prediction or estimation value for an optimal scaling factor s. Since the input values in $B_{pred}$ are already determined by a prediction method, in one example it can be assumed that $B_{pred} \approx B_{org}$, and thus $s \approx 1$. Therefore, in one example it can be assumed that $s_{pred} = 1$. The prediction error for the optimal scaling factor *s* may be determined as follows:

$$\text{Equation No. (7)} \qquad s - s_{pred} = s - 1.$$

A quantized scaling factor $s_Q$ may be determined based on the optimal scaling factor *s*. The quantized scaling factor $s_Q$ may be determined by quantizing the optimal scaling factor *s* prior to encoding. In one example, the optimal scaling factor *s* may be determined based on Equation No. (6). In one example, the quantized scaling factor $s_Q$ may be determined as follows:

$$\text{Equation No. (8)} \qquad s_Q = \left[ \frac{(s-1)}{Q} \right]$$

where the operator [ ] represents rounding to the closest integer, and where *Q* represents a quantization step (e.g.,

$Q = \frac{1}{8}$).

The scaling factor $\hat{s}$ may be determined based on inverse quantization of the quantized scaling factor $s_Q$. In one example, the scaling factor $\hat{s}$ may be determined as follows:

$$\text{Equation No. (9)} \qquad \hat{s} = 1 + Q.s_Q$$

The scaling factor $\hat{s}$ may be determined by both the encoder and the decoder.

In one example, the encoder may determine the optimal scaling factor *s,* and then determine the quantized scaling factor $s_Q$ based on the optimal scaling factor. The encoder may then determine the scaling factor $\hat{s}$ based on the quantized scaling factor $s_Q$. In one example, the encoder may only encode and transmit the value of the quantized scaling parameter $s_Q$.

In one example, the decoder may receive and decode quantized scaling parameter $s_Q$. The decoder may then determine the scaling factor $\hat{s}$ based on the quantized scaling factor $s_Q$ received in the bit stream. In one example, the decoder estimates the offset ô based on the scaling factor $\hat{s}$.

### 5. Encoding

The quantized scaling factor $s_Q$ can be encoded using an entropy coding method. In one example, encoding may be performed in compliance with the HEVC standard, and the quantized scaling factor $s_Q$ can be encoded using Context Adaptive Binary Arithmetic Coding (CABAC).

In one example, it may be advantageous to signal that adjustment of a prediction block was not performed. For example, it may be advantageous not to perform the adjustment of a prediction block when the value of the quantized scaling factor $s_Q$ exceeds a threshold because such encoding may require a large number of bits to encode.

In one example, when the adjustment is not performed, an additional flag need not be transmitted, rather the determination may be made based on the values of the parameters. For example setting $s_Q$ to 0 on the encoder side will indicate to the decoder that no adjustment was performed, while only encoding a low number of bits (possibly less than 1 bit on average in the case of CABAC encoding). In one example, it may be signaled that adjustment was not performed by setting the value of the parameters as follows: $s_Q = 0$, thus $\hat{s} = 1$, $\hat{o} = 0$, and thus $B'_{pred} = B_{pred}$.

In one example, rate distortion optimization can be performed on the encoder. In one example, the rate distortion optimization may be based on modifying the value of $s_Q$ chosen on the encoder side. An aspect of present principles performs rate distortion optimization by testing during encoding values of the quantized scaling factor $s_Q$. In one example, the value of $s_Q$ is replaced by any integer value $s_Q'$ such that $0 \leq s_Q' \leq s_Q$. For each value of $s_Q'$, a cost $J$ may be determined by encoding and reconstructing the block. For each value of $s_Q'$, the value of a cost $J$ may be determined as follows:

$$\text{Equation No. (10)} \quad J = D + \lambda . R$$

where $D$ is the distortion measured on the reconstructed block, $R$ is the bitrate necessary to encode the block (including the bits necessary for the encoding of $s_Q'$) and $\lambda$ is a parameter chosen by the encoder. The rate distortion optimization may determine the value of cost $J$. Based on the lowest value of cost $J$, a value of $s_Q'$ may be determined. In one example, only a subset of the possible values of $s_Q'$ (e.g., a subset containing only the values 0 and $s_Q$) can be tested in order to reduce the processing time for the encoder.

**6. Block Matching Prediction Adjustment**

An aspect of present principles is directed to modifying a prediction algorithm to take into account adjustment when the prediction algorithm is based on block matching (e.g., inter prediction).

In block matching methods, the current block $B_{org}$ is compared to a set of blocks from one or several reference frames. For each tested block, an error metric, such as mean squared error (MSE), is determined in order to find the best match to the current block $B_{org}$.

In one example, a modified block matching may be adapted to utilize prediction adjustment in accordance with present principles.

In one example, for each block B in a set of blocks $\Omega$ to be tested, an adjusted block $B'$ may be determined based on Equations Nos. 1,3,6,8 and 9. Based on the set of blocks $\Omega$ and the adjusted version B' of each block B in $\Omega$, two candidate blocks $B_0$ and $B_1$ may be determined such that:

$$\text{Equation No. (11)} \quad B_0 = \text{argmin}_{B \in \Omega} \left\| B - B_{org} \right\|_2^2$$

$$\text{Equation No. (12)} \quad B_1 = \text{argmin}_{B \in \Omega} \left\| B' - B_{org} \right\|_2^2$$

In one example, a metric, such as MSE, may be used for evaluating the best matches. In another example, other error determination metrics may be used for evaluating the best matches.

In one example, the encoder can choose between the unmodified version of $B_0$ (i.e. $B_0$ with parameter $s_Q' = 0$) or any of the modified versions of $B_1$ (i.e. $B_1$ with parameter $s_Q'$ between 0 and $s_Q$) using the rate distortion criterion in Equation No. (10). In one example, inter prediction may be used and the rate $R$ in Equation No. (10) may include the encoding of a vector between $B_{org}$ and one of the candidate blocks $B_0$ or $B_1$.

**7. Figures**

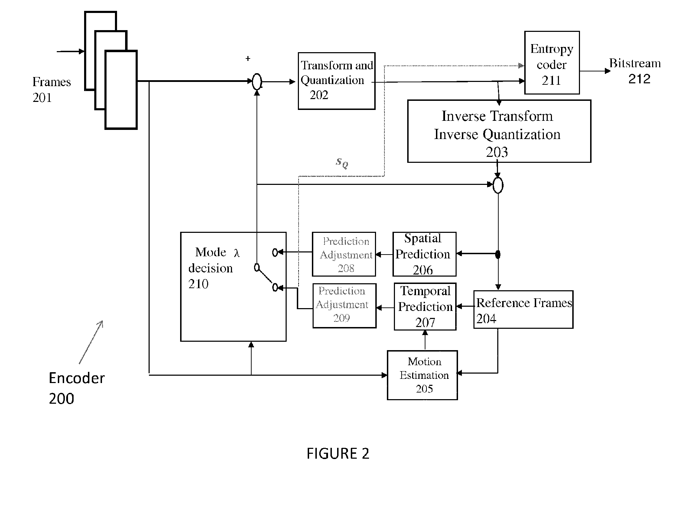

Fig. 2 is a diagram depicting an exemplary encoder 200 in accordance with present principles. The encoder 200 may receive frames 201. Frames 201 may be images or picture frames that are part of an uncompressed video sequence of images or picture frames.

Encoder 200 may further include a block 202 for performing a transform operation (e.g., using a DCT transform) and quantization of the transform coefficients. Block 202 may perform a transform operation on a residue. The residue is the difference between a current block and a prediction block. Block 202 may determine quantized transform coefficients based on the transformed residue.

Encoder 200 may further include a block 203 for performing inverse transform and inverse quantization. Block 203 may receive quantized transform coefficients from block 202. Block 203 may perform inverse transform and inverse quantization on the quantized transform coefficients to determine a reconstructed prediction residual. The reconstructed prediction residual may contain the errors caused by the quantization of the coefficients. Block 203 may output the reconstructed prediction residual.

Encoder 200 may further include a block 204. Block 204 may receive previously reconstructed blocks of pixels. Block 204 may determine one or more reference frame(s) composed of previously reconstructed blocks of previously reconstructed frames. Block 204 may output the reference frame(s).

Encoder 200 may further include block 205 for performing motion estimation. Block 205 may receive a current block to be encoded and reference frame(s). Block 205 may perform motion estimation on the current block and the reference frame(s). Block 205 may perform block matching to determine a block of the reference frame(s) that best matches the current block. In one example, block 205 may perform the block matching step in accordance with the principles described in Section 6 above, including methods performed in accordance with Equations Nos. (11) and (12)

Block 205 may determine a motion vector based on the positions of the current block and the selected reference frame block (e.g., the block selected through block matching). Block 205 may output the motion vector. In one example, the motion vector may indicate the position of the best block in the reference frame relatively to the position of the current block.

Encoder 200 may further include a block 206. Block 206 may receive a current block to be encoded and a part of a current frame that was previously reconstructed. Block 206 may perform spatial prediction based on the current block and parts of the reconstructed frame. In one example, block 206 may perform spatial prediction based on the intra prediction modes of the HEVC or H.264 standards. Block 206 may output a spatial prediction block and syntax information specifying the spatial prediction method used.

Encoder 200 may further include a block 207. Block 207 may receive the position of the current block to be encoded, reference frame(s) and a motion vector. Block 207 may perform temporal prediction based on the position of the current block to be encoded, the reference frame(s) and the motion vector. In one example, block 207 may perform temporal prediction based on the inter prediction methods defined in the HEVC or H.264 standards. Block 207 may output a temporal prediction block.

Encoder 200 may further include a block 208. Block 208 may receive a spatial prediction block from block 206. Block 208 performs prediction adjustment on the received spatial prediction block in accordance with present principles. Block 208 may perform prediction adjustment in accordance with the methods described in Sections 1-6 above. For example, block 208 may perform prediction adjustment in accordance with Equation No. (1). In one example, block 208 may determine an adjusted spatial prediction block based on the prediction adjustment of the received spatial prediction block.

Block 208 may perform prediction adjustment based on an offset $\hat{o}$. The offset o may be determined in accordance with the methods described in Section 2 above. For example, block 208 may determine the offset $\hat{o}$ in accordance with Equation No. (3).

Block 208 may perform prediction adjustment based on an optimal scaling factor s. Block 208 may determine the optimal scaling factor s. The optimal scaling factor $s$ may be determined in accordance with the methods described in Section 3 above. For example, block 208 may determine the optimal scaling factor $s$ in accordance with Equation No. (6).

Block 208 may perform prediction adjustment based on a quantized scaling factor $s_Q$. Block 208 may determine the quantized scaling factor $s_Q$. In one example, block 208 may determine the quantized scaling factor $s_Q$ based on the optimal scaling factor s. The quantized scaling factor $s_Q$ may be determined in accordance with the methods described in Section 4 above. For example, block 208 may determine the quantized scaling factor $s_Q$ in accordance with Equation No. (8).

Block 208 may perform prediction adjustment based on a scaling factor s. In one example, block 208 may determine the scaling factor s based on the quantized scaling factor $s_Q$. The scaling factor $\hat{s}$ may be determined in accordance with the methods described in Section 4 above. For example, block 208 may determine the scaling factor $\hat{s}$ in accordance with Equation No. (9).

Block 208 may output the adjusted spatial prediction block. Block 208 may also output the quantized scaling factor $s_Q$.

Encoder 200 may further include a block 209. Block 209 may receive a temporal prediction block from block 207. Block 209 performs prediction adjustment on the temporal prediction block in accordance with present principles. Block 209 may perform prediction adjustment in accordance with the methods described in Sections 1-6 above. In one example, block 209 may perform prediction adjustment in accordance with the methods described in Section 1 above. For example, block 209 may perform prediction adjustment in accordance with Equation No. (1). In one example, block 209 may determine an adjusted temporal prediction block based on the prediction adjustment of the received temporal prediction block.

Block 209 may perform prediction adjustment based on an offset $\hat{o}$. The offset o may be determined in accordance with the methods described in Section 2 above. For example, block 209 may determine the offset $\hat{o}$ in accordance with Equation No. (3).

Block 209 may perform prediction adjustment based on an optimal scaling factor s. Block 209 may determine the optimal scaling factor $s$. The optimal scaling factor $s$ may be determined in accordance with the methods described in Section 3 above. For example, block 209 may determine the optimal scaling factor $s$ in accordance with Equation No. (6).

Block 209 may perform prediction adjustment based on a quantized scaling factor $s_Q$. Block 209 may determine the quantized scaling factor $s_Q$. In one example, block 209 may determine the quantized scaling factor $s_Q$ based on the optimal scaling factor $s$. The quantized scaling factor $s_Q$ may be determined in accordance with the methods described in Section 4 above. For example, block 209 may determine the quantized scaling factor $s_Q$ in accordance with Equation No. (8).

Block 209 may perform prediction adjustment based on a scaling factor $\hat{s}$. In one example, block 209 may determine the scaling factor $s$ based on the quantized scaling factor $s_Q$. The scaling factor $\hat{s}$ may be determined in accordance with the methods described in Section 4 above. For example, block 209 may determine the scaling factor $\hat{s}$ in accordance with Equation No. (9).

Block 209 may output the adjusted temporal prediction block. Block 209 may also output the quantized scaling factor $s_Q$.

Encoder 200 may further include a block 210 for performing mode decisions. Block 210 may receive adjusted prediction blocks (e.g., an adjusted spatial prediction block from block 208 and an adjusted temporal prediction block from block 209). Block 210 may determine a mode based on the received prediction blocks. Block 210 may output a prediction block based on the determined mode.

Block 210 may perform a mode decision in accordance with the methods described for rate optimization in Section 5 above. For example, block 210 may determine a cost variable J for different values of $s_Q'$ between 0 and $s_Q$ based on Equation No. (10). In one example, block 210 may determine a cost J based on a distortion D of the prediction (e.g. using mean squared error) and the number of bits required for this prediction. The computation of the number of bits may include the encoding of the quantized transform coefficients and the value $s_Q$ or $s_Q'$. In one example, block 210 may also determine the best value of $s_Q'$. In one example, block 210 may determine a mode decision based on the best value of $s_Q'$. In one example, block 210 may determine a mode decision based on a minimal cost J as described in Section 5 above. In one example, block 210 may output a prediction block that provides the minimal cost J.

Encoder 200 may further include a block 211. Block 211 may receive data to be transmitted to a decoder. For example, block 211 may receive quantized transform coefficients, a flag specifying the prediction mode of the current block (i.e. spatial or temporal), the value of the quantized scaling factor $s_Q$ or $s_Q'$ and any other information required by a decoder. Block 211 may encode the received data using an entropy coder. Block 211 may output a bitstream.

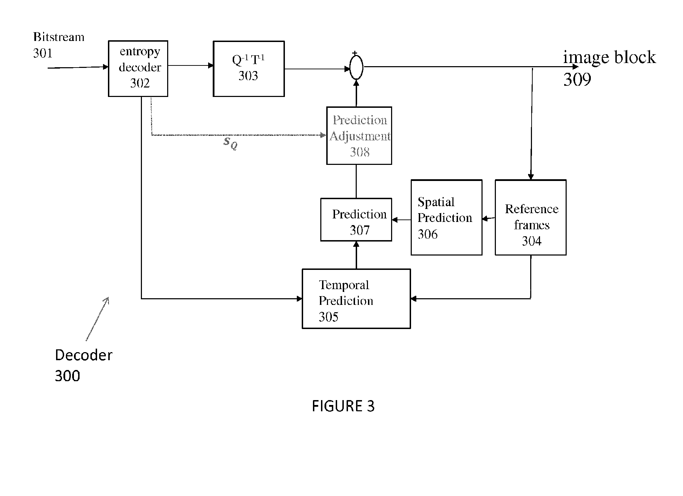

Fig. 3 is a diagram depicting an exemplary decoder 300 in accordance with present principles. The decoder 300 may receive an encoded bitstream 301. Bitstream 301 may include various encoded data, including encoded quantized transform coefficients, encoded quantized scaling factor $s_Q$ or $s_Q'$ and any encoded syntax information.

Decoder 300 may further include a block 302. Block 302 may receive the bitstream 301. Block 302 may decode the bitstream 301 to determine decoded data, including quantized transform coefficients and any syntax information. Block 302 may further decode quantized scaling factor $s_Q$. Block 302 may output the decoded data and/or the decoded quantized scaling factor $s_Q$.

Encoder 300 may further include a block 303 for performing inverse transform and inverse quantization. Block 303 may receive quantized transform coefficients from block 302. Block 303 may perform inverse quantization and inverse transform on the quantized transform coefficients to determine a decoded prediction residual. This prediction residual may contain the errors caused by the quantization of the coefficients. Block 303 may then output the decoded prediction residual.

Decoder 300 may further include a block 304. Block 304 may receive previously decoded blocks of pixels. Block 304 may determine one or more reference frame(s) composed of previously decoded blocks of previously decoded frames. Block 304 may output the reference frame(s).

Encoder 300 may further include a block 305. Block 305 may perform temporal prediction based on the position of the current block to be decoded, reference frame(s) and motion vector. In one example, block 305 may perform temporal prediction based on the inter prediction methods defined in the HEVC or H.264 standards. In one example, block 305 may perform motion compensation. Block 305 may perform motion compensation based on the block of the reference frame pointed to by the motion vector. This block may form a temporal prediction block. Block 305 may output the temporal prediction block.

Encoder 300 may further include a block 306. Block 306 may receive a current block to be decoded and a part of a current frame that was previously decoded. Block 306 may perform spatial prediction based on the received part of a current frame that was previously decoded and the syntax information specifying the spatial prediction method to use. In one example, block 306 may perform spatial prediction based on the intra prediction modes of the HEVC or H.264 standards. Block 306 may output a spatial prediction block.

Encoder 300 may further include a block 307. Block 307 may receive either the output of the spatial prediction of block 306 or that of the temporal prediction of block 305. Block 307 may choose a prediction block based on the mode chosen by block 210 of the encoder 200 in Fig. 2.

Encoder 300 may further include a block 308. Block 308 may receive a prediction block from block 307 and the value of quantized scaling factor $s_Q$. Block 308 performs prediction adjustment on the received prediction block in accordance with present principles. Block 308 may perform prediction adjustment in accordance with the methods described in Sections 1-6 above. For example, block 308 may perform prediction adjustment in accordance with Equation No. (1). In one example, block 308 may determine an adjusted prediction block based on the prediction adjustment of the received prediction block.

Block 308 may perform prediction adjustment based on an offset $\hat{o}$. The offset $\hat{o}$ may be determined in accordance with the methods described in Section 2 above. For example, block 308 may determine the offset $\hat{o}$ in accordance with Equation No. (3). In one example, the offset $\hat{o}$ may be estimated at the decoder based on a decoded quantized scaling factor $s_Q$.

Block 308 may perform prediction adjustment based on a scaling factor $\hat{s}$. In one example, block 308 may determine the scaling factor s based on the quantized scaling factor $s_Q$. The scaling factor $\hat{s}$ may be determined in accordance with the methods described in Section 4 above. For example, block 308 may determine the scaling factor $\hat{s}$ in accordance with Equation No. (9). Block 308 may determine an adjusted prediction block based on the scaling factor $\hat{s}$ and offset $\hat{o}$. Block 308 may output the adjusted prediction block.

Image block 309 may be composed of decoded image blocks. A decoded image block may be the sum of the adjusted prediction block and a decoded prediction residual.

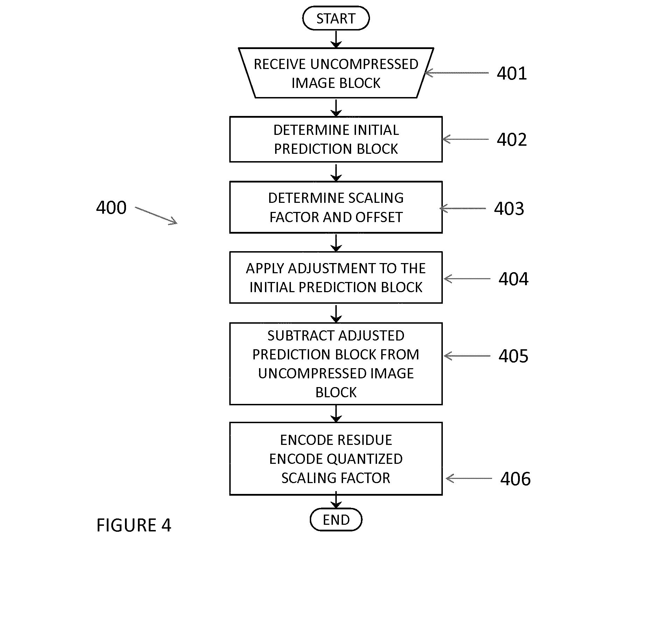

Fig. 4 is a diagram depicting an exemplary encoding method 400 in accordance with present principles.

The method 400 may include a block 401. Block 401 receives an uncompressed image block and passes control to function block 402. Block 402 determines an initial prediction block. Block 402 may determine the initial prediction block based on spatial prediction (e.g. intra prediction of H.264 or HEVC), temporal prediction (e.g. inter prediction of H.264 or HEVC), inter-layer prediction in the case of scalable compression. Block 402 may then pass control to function block 403.

Block 403 may determine the scaling factor $\hat{s}$ and offset o. Block 403 may determine the scaling factor and offset in accordance with the methods described in Sections 1-6. Block 403 may compute on an offset $\hat{o}$. The offset $\hat{o}$ may be determined in accordance with the methods described in Section 2 above. For example, block 403 may determine the offset $\hat{o}$ in accordance with Equation No. (3). Block 403 may determine an optimal scaling factor s. The optimal scaling factor $s$ may be determined in accordance with the methods described in Section 3 above. For example, block 403 may determine the optimal scaling factor $s$ in accordance with Equation No. (6). Block 403 may determine a quantized scaling factor $s_Q$. In one example, block 403 may determine the quantized scaling factor $s_Q$ based on the optimal scaling factor s. The quantized scaling factor $s_Q$ may be determined in accordance with the methods described in Section 4 above. For example, block 403 may determine the quantized scaling factor $s_Q$ in accordance with Equation No. (8). Block 403 may compute a scaling factor $\hat{s}$. In one example, block 403 may determine the scaling factor $\hat{s}$ based on the quantized scaling factor $s_Q$. The scaling factor $\hat{s}$ may be determined in accordance with the methods described in Section 4 above. For example, block 403 may determine the scaling factor $\hat{s}$ in accordance with Equation No. (9). Block 403 may pass control to functional block 404.

Block 404 performs prediction adjustment on the initial prediction block. Block 404 may perform prediction adjustment in accordance with the methods described in Sections 1-6 above. In one example, block 404 may perform prediction adjustment in accordance with the methods described in Section 1 above. For example, block 404 may perform prediction adjustment in accordance with Equation No. (1). Block 404 may output an adjusted prediction block. Block 404 may then pass control to functional block 405.

Block 405 may subtract adjusted prediction block from the uncompressed image block to determine a prediction residue and passes control to functional block 406. Block 406 may encode residue where the residue consists of the difference between the uncompressed image block and the adjusted prediction block. Block 406 may further encode the quantized scaling factor $s_Q$.

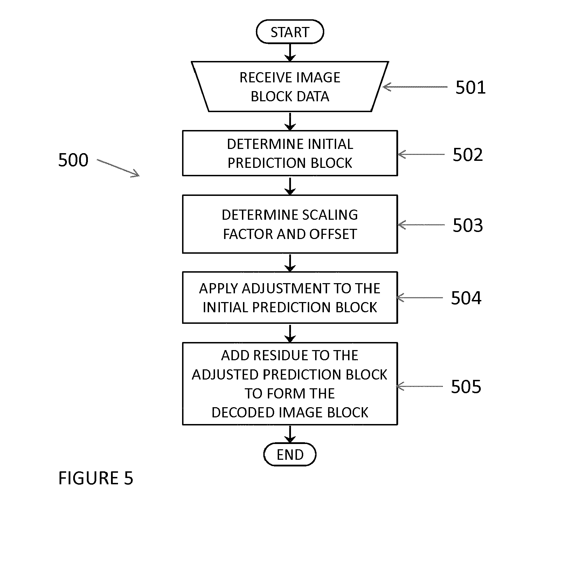

Fig. 5 is a diagram depicting an exemplary decoding method 500 in accordance with present principles. The method 500 may include a block 501. Block 501 receives a compressed image block data and passes control to function block 502. Block 502 determines an initial prediction block. Block 502 may determine the initial prediction block based on spatial prediction (e.g. intra prediction of H.264 or HEVC), temporal prediction (e.g. inter prediction of H.264 or HEVC), inter-layer prediction in the case of scalable compression. Block 502 may then pass control to function block 503.

Block 503 may determine the scaling factor $\hat{s}$ and offset o. Block 503 may decode a quantized scaling factor $s_Q$. Block 503 may determine the scaling factor and offset in accordance with the methods described in Sections 1-6.

Block 503 may estimate an offset $\hat{o}$ based on the quantized scaling factor $s_Q$. The offset $\hat{o}$ may be determined in accordance with the methods described in Section 2 above. For example, block 503 may determine the offset $\hat{o}$ in accordance with Equation No. (3).

Block 503 may compute a scaling factor $\hat{s}$. In one example, block 503 may determine the scaling factor s based on the decoded quantized scaling factor $s_Q$. The scaling factor s may be determined in accordance with the methods described in Section 4 above. For example, block 503 may determine the scaling factor $\hat{s}$ in accordance with Equation No. (9). Block 503 may pass control to functional block 504.

Block 504 performs prediction adjustment on the initial prediction block. Block 504 may perform prediction adjustment in accordance with the methods described in Sections 1-6 above. In one example, block 504 may perform prediction adjustment in accordance with the methods described in Section 1 above. For example, block 504 may perform prediction adjustment in accordance with Equation No. (1). Block 504 may output an adjusted prediction block. Block 504 may then pass control to functional block 505.

Block 505 may add residue to the adjusted prediction block to form a decoded image block. The residue may be composed of the difference between an uncompressed image block and an adjusted prediction block. The residue may be decoded from quantized coefficients. For example, the residue may be decoded by applying inverse quantization and inverse transform to the quantized transform coefficients.

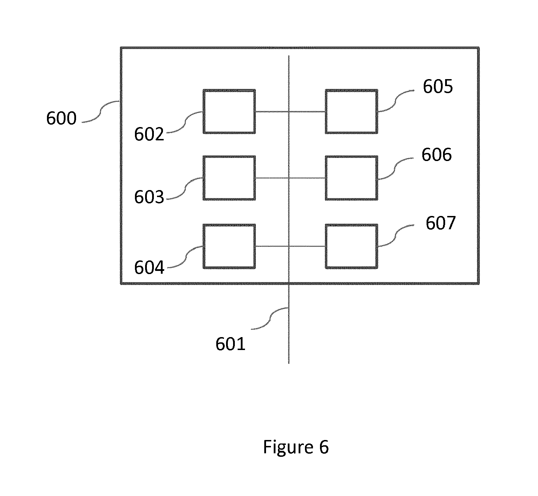

Fig. 6 represents an exemplary architecture of a device 600 which may be configured to implement the systems described in relation with Figs. 2-3 and the methods described in relation with Figs. 4-5. In one example, Fig. 6 includes the encoder described in Fig. 2. In one example, Fig. 6 includes the decoder described in Fig. 3. In one example, Fig. 6 represents an apparatus that may be configured to implement in whole or in part the encoding method according to present principles, including principles described in relation to Fig. 4. In one example, Fig. 6 represents an apparatus 600 that may be configured to implement in whole or in part the decoding method according to present principles, including principles described in relation to Fig. 5.

Apparatus 600 comprises following elements that are linked together by a data and address bus 601:

- a microprocessor 602 (or CPU), which is, for example, a DSP (or Digital Signal Processor);
- a ROM (or Read Only Memory) 603;
- a RAM (or Random Access Memory) 604;
- an I/O interface 605 for reception of data to transmit, from an application; and
- a battery 606 (or other suitable power source).

According to a variant, the battery 606 is external to the apparatus 600. In each of mentioned memory, the word « register » used in the specification can correspond to area of small capacity (some bits) or to very large area (e.g. a whole program or large amount of received or decoded data). ROM 603 comprises at least a program and parameters. Algorithm of the methods according to the invention is stored in the ROM 603. When switched on, the CPU 602 uploads the program in the RAM and executes the corresponding instructions.

RAM 604 comprises, in a register, the program executed by the CPU 602 and uploaded after switch on of the device 600, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific example of encoding or encoder, the image or picture I is obtained from a source. For example, the source belongs to a set comprising:

- a local memory (603 or 604), e.g. a video memory or a RAM (or Random Access Memory), a flash memory, a ROM (or Read Only Memory), a hard disk ;
- a storage interface (605), e.g. an interface with a mass storage, a RAM, a flash memory, a ROM, an optical disc or a magnetic support;
- a communication interface (605), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

According to different embodiments of the decoding or decoder, the decoded image I is sent to a destination; specifically, the destination belongs to a set comprising:

- a local memory (603 or 604), e.g. a video memory or a RAM, a flash memory, a hard disk;

- a storage interface (605), e.g. an interface with a mass storage, a RAM, a flash memory, a ROM, an optical disc or a magnetic support;
- a communication interface (605), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, Wi-Fi ® or a Bluetooth ® interface); and
- a display.

According to different examples of encoding or encoder, the bitstream BF and/or F are sent to a destination. As an example, one of bitstream F and BF or both bitstreams F and BF are stored in a local or remote memory, e.g. a video memory (604) or a RAM (604), a hard disk (803). In a variant, one or both bitstreams are sent to a storage interface (605), e.g. an interface with a mass storage, a flash memory, ROM, an optical disc or a magnetic support and/or transmitted over a communication interface (605), e.g. an interface to a point to point link, a communication bus, a point to multipoint link or a broadcast network.

According to different examples of decoding or decoder, the bitstream BF and/or F is obtained from a source. Exemplarily, the bitstream is read from a local memory, e.g. a video memory (604), a RAM (604), a ROM (603), a flash memory (603) or a hard disk (603). In a variant, the bitstream is received from a storage interface (605), e.g. an interface with a mass storage, a RAM, a ROM, a flash memory, an optical disc or a magnetic support and/or received from a communication interface (605), e.g. an interface to a point to point link, a bus, a point to multipoint link or a broadcast network.

According to different examples, apparatus 600 being configured to implement an encoding method in accordance with present principles, belongs to a set comprising:

- a mobile device;
- a communication device;
- a game device;
- a tablet (or tablet computer) ;
- a laptop ;
- a still image camera;
- a video camera;
- an encoding chip;
- a still image server ; and
- a video server (e.g. a broadcast server, a video-on-demand server or a web server).

According to different examples, apparatus 600 being configured to implement a decoding method in accordance with present principles, belongs to a set comprising:

- a mobile device;
- a communication device;
- a game device;
- a set top box;
- a TV set;
- a tablet (or tablet computer) ;
- a laptop ;
- a display and
- a decoding chip.

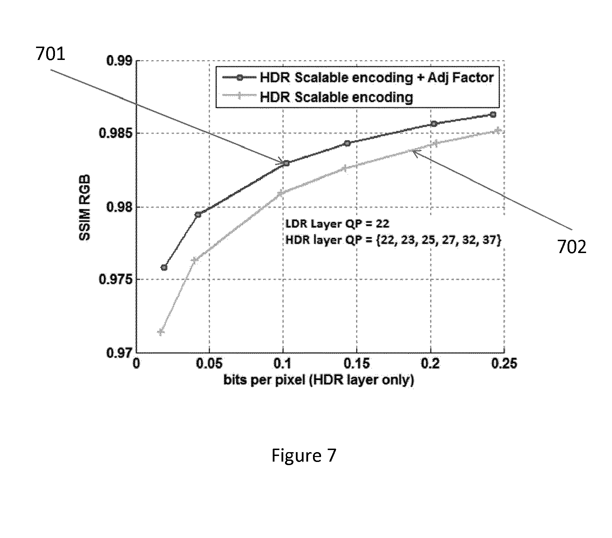

Fig. 7 illustrates rate distortion curves obtained by a scalable encoding scheme where the base layer is a LDR image and the enhancement layer is a HDR image. Curve 701 illustrates coding performance with prediction adjustment. Curve 702 illustrates coding performance without prediction adjustment. The X axis pertains to the value of the SSIM quality metric computed on the reconstructed HDR image. The Y axis pertains to the number of bits per pixels (bpp) of the HDR bitstream. The Y axis does not include the bits of the LDR bitstream. In Fig. 7, the LDR image is encoded and decoded with a quantization parameter QP=22 using HEVC encoding.

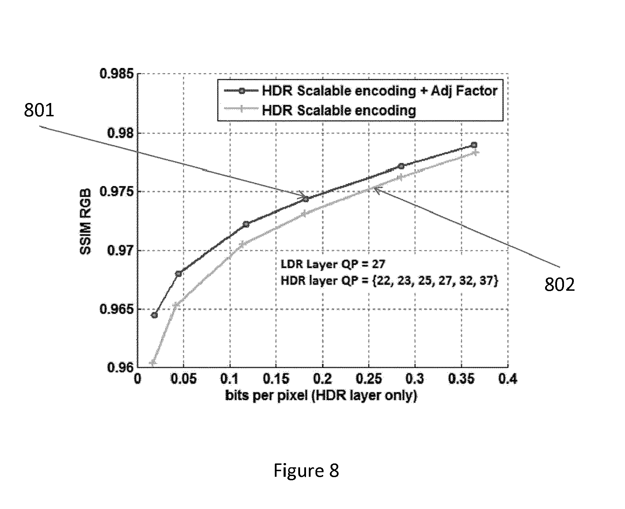

Fig. 8 illustrates rate distortion curves obtained by a scalable encoding scheme where the base layer is a LDR image and the enhancement layer is a HDR image. Curve 801 illustrates coding performance with prediction adjustment. Curve 802 illustrates coding performance without prediction adjustment. The X axis pertains to the value of the SSIM quality metric computed on the reconstructed HDR image. The Y axis pertains to the number of bits per pixels (bpp) of the HDR bitstream. The Y axis does not include the bits of the LDR bitstream. In Fig. 8, the LDR image is encoded and decoded with a QP=27 using HEVC encoding, meaning that the LDR image in Fig. 8 has a lower quality than the QP=22 LDR image in Fig. 7.

The experiments underlying Figs. 7-8 were carried out by encoding an HDR image with varying QP parameters (22, 23, 25 27, 32, 37) and by using a decoded version of a corresponding LDR image in order to perform inter-layer predictions consisting in predicting the enhancement layer (i.e. the HDR image) from the base layer (i.e. the LDR image). As shown in Figs. 7-8, the curves 701 and 801 representing results generated with adjustment have better compression performance than the curves 702 and 802 representing results generated without adjustment.

Implementations of the various processes and features described herein may be embodied in a variety of different equipment or applications. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example, or to carry as data the actual syntax-values written by a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Numerous specific details have been set forth herein to provide a thorough understanding of the present invention. It will be understood by those skilled in the art, however, that the examples above may be practiced without these specific details. In other instances, well-known operations, components and circuits have not been described in detail so as not to obscure the present invention. It can be appreciated that the specific structural and functional details disclosed herein may be representative and do not necessarily limit the scope of the present invention.

Various examples of the present invention may be implemented using hardware elements, software elements, or a combination of both. Some examples may be implemented, for example, using a computer-readable medium or article which may store an instruction or a set of instructions that, if executed by a machine, may cause the machine to perform a method and/or operations in accordance with the examples. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus and constituents included therein, for example, a processor, an encoder and a decoder, may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

**Claims**

1. A method for encoding an image frame divided into blocks, comprising:

    generating, with a processor, for each block in the image frame a prediction block based on at least a prediction method;
    generating, with the processor, a scaling factor and an offset for adjusting the prediction block; and
    transforming, with the processor, the prediction block into an adjusted prediction block based on the scaling factor and the offset;
    wherein the scaling factor and offset minimize error between the block and the adjusted prediction block.

2. An encoder for encoding an image frame divided into blocks, comprising:

    a processor configured to, for each block in the image frame, generate a prediction block based on at least a prediction method;
    wherein the processor is further configured to generate a scaling factor and an offset for adjusting the prediction block and to transform the prediction block into an adjusted prediction block based on the scaling factor and the offset; and
    wherein the scaling factor and offset minimize error between the block and the adjusted prediction block.

3. The method of claim 1 or the encoder of claim 2 further comprising encoding with the processor a residue based on the block and the adjusted prediction block.

4. The method of claim 1 or the encoder of claim 2 wherein the prediction method is at least one of inter prediction, inter-layer prediction and intra prediction.

5. The method of claim 1 or the encoder of claim 2 wherein the scaling factor is determined based on a quantized scaling factor.

6. The method of claim 1 or the encoder of claim 2 wherein the offset is not encoded.

7. The method of claim 1 or the encoder of claim 2 wherein a quantized scaling factor is encoded.

8. The method of claim 1 or the encoder of claim 2, wherein the offset is determined based on a quantized scaling factor.

9. The method of claim 1 or the encoder of claim 2, wherein the scaling factor and the offset minimize error given the offset is estimated but not encoded and the scaling factor is quantized.

10. The method of claim 1 or the encoder of claim 2, wherein the quantized scaling factor is determined using rate distortion optimization.

11. The method of claim 1 or the encoder of claim 2, wherein the error is minimized based on at least one selected from a group of a Minimum Square Error (MSE) metric, a sum of absolute difference (SAD), structural similarity index (SSIM)).

12. A method for decoding an image frame from a bit stream comprising:

generating, with a processor, for each block in the image frame a prediction block based on at least a prediction method;
generating, with the processor a scaling factor and an offset for adjusting the prediction block; and
transforming, with the processor, the prediction block into an adjusted prediction block based on the scaling factor and the offset;
wherein the scaling factor and offset minimize error between the block and the adjusted prediction block.

13. A decoder for decoding from a bit stream an image frame divided into blocks, comprising:

a processor configured to, for each block in the image frame, generate a prediction block based on at least a prediction method;
wherein the processor is further configured to generate a scaling factor and an offset for adjusting the prediction block and to transform the prediction block into an adjusted prediction block based on the scaling factor and the offset; and
wherein the scaling factor and offset minimize error between the block and the adjusted prediction block.

14. The method of claim 12 or the decoder of claim 13, further comprising decoding with the processor a residue based on the block and the adjusted prediction block.

15. The method of claim 12 or the decoder of claim 13, wherein the prediction method is at least one of inter prediction, inter-layer prediction and intra prediction.

FIGURE 1

FIGURE 2

FIGURE 3

START

RECEIVE UNCOMPRESSED IMAGE BLOCK —— 401

DETERMINE INITIAL PREDICTION BLOCK —— 402

400

DETERMINE SCALING FACTOR AND OFFSET —— 403

APPLY ADJUSTMENT TO THE INITIAL PREDICTION BLOCK —— 404

SUBTRACT ADJUSTED PREDICTION BLOCK FROM UNCOMPRESSED IMAGE BLOCK —— 405

ENCODE RESIDUE ENCODE QUANTIZED SCALING FACTOR —— 406

END

FIGURE 4

START

RECEIVE IMAGE
BLOCK DATA — 501

500

DETERMINE INITIAL
PREDICTION BLOCK — 502

DETERMINE SCALING
FACTOR AND OFFSET — 503

APPLY ADJUSTMENT TO THE
INITIAL PREDICTION BLOCK — 504

ADD RESIDUE TO THE
ADJUSTED PREDICTION BLOCK
TO FORM THE
DECODED IMAGE BLOCK — 505

END

FIGURE 5

Figure 6

Figure 7

Figure 8

Europäisches
Patentamt

European
Patent Office

Office européen
des brevets

## EUROPEAN SEARCH REPORT

**Application Number**

EP 15 30 5760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIKOLA SPRLJAN ET AL: "Macroblock-level Weighted Prediction", 90. MPEG MEETING; 26-10-2009 - 30-10-2009; XIAN; (MOTION PICTURE EXPERT GROUP OR ISO/IEC JTC1/SC29/WG11),, no. M16969, 23 October 2009 (2009-10-23), XP030045559, * Section 1. Introduction * * Section 2. Algorithm description * * figures 1,2 * ----- | 1-15 | INV. H04N19/176 H04N19/102 H04N19/136 |
| A | PENG YIN ET AL: "Localized Weighted Prediction for Video Coding", CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ, 23 May 2005 (2005-05-23), pages 4365-4368, XP010816640, DOI: 10.1109/ISCAS.2005.1465598 ISBN: 978-0-7803-8834-5 * Section III Localised weighted prediction * ----- | 1-15 | |
| A | US 2008/130750 A1 (SONG BYUNG-CHEOL [KR]) 5 June 2008 (2008-06-05) * abstract * * paragraph [0069] - paragraph [0091] * * figures 4,5 * ----- | 1-15 | **TECHNICAL FIELDS SEARCHED (IPC)**<br><br>H04N |
| A | WO 2011/012669 A2 (THOMSON LICENSING [FR]; THOREAU DOMINIQUE [FR]; FRANCOIS EDOUARD [FR];) 3 February 2011 (2011-02-03) * abstract * * page 6, line 24 - page 12, line 19 * * figures 2,3 * ----- | 1-15 | |

-/--

The present search report has been drawn up for all claims

| Place of search | Date of completion of the search | Examiner |
|---|---|---|
| The Hague | 26 November 2015 | Hampson, Frances |

Europäisches
Patentamt

European
Patent Office

Office européen
des brevets

**EUROPEAN SEARCH REPORT**

Application Number

EP 15 30 5760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOAQUIN LOPEZ ET AL: "Block-Based Illumination Compensation and Search Techniques for Multiview Video Coding", PROCEEDINGS OF THE PICTURE CODING SYMPOSIUM, XX, XX, 15 December 2004 (2004-12-15), pages 1-6, XP002437841, * II. Illumination Compensation * ----- | 1-15 | |

TECHNICAL FIELDS
SEARCHED    (IPC)

The present search report has been drawn up for all claims

| Place of search | Date of completion of the search | Examiner |
|---|---|---|
| The Hague | 26 November 2015 | Hampson, Frances |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                    
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5760

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2015

| Patent document cited in search report | Publication date | Patent family member(s) | Publication date |
|---|---|---|---|
| US 2008130750 A1 | 05-06-2008 | CN 101193302 A<br>KR 20080050114 A<br>US 2008130750 A1 | 04-06-2008<br>05-06-2008<br>05-06-2008 |
| WO 2011012669 A2 | 03-02-2011 | CN 102474608 A<br>EP 2460355 A2<br>FR 2948845 A1<br>JP 5545783 B2<br>JP 2013500661 A<br>KR 20120039675 A<br>US 2012128068 A1<br>WO 2011012669 A2 | 23-05-2012<br>06-06-2012<br>04-02-2011<br>09-07-2014<br>07-01-2013<br>25-04-2012<br>24-05-2012<br>03-02-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.-H. TSANG ; Y.-L. CHAN ; W.-C. SIU.** Region-Based Weighted Prediction for Coding Video With Local Brightness Variations. *IEEE TRANSACTIONS ON CIRCUITS AND SYSTEMS FOR VIDEO TECHNOLOGY,* March 2013